# EUROPEAN PATENT APPLICATION

(11) **EP 1 282 281 A1**
(43) Date of publication of application: **05.02.2003**
(21) Application number: 01440253.1
(22) Date of filing: 02.08.2001
(51) Int. Cl.: H04L 29/06

(54) **Network-unit, processor system, method and signal**

(71) Applicant: ALCATEL, 75008 Paris (FR)
(72) Inventor: Godon, Marc, B-1840 Londerzeel (BE); Defloor, Michel, B-3012 Leuven (BE)
(74) Representative: Rausch, Gabriele, Dr.

(57) **Abstract**

Network-units (switches, routers, bridges, gateways, servers) for generating HTML-signals for displaying web-pages like portals are static and offer limited numbers of possibilities. By dividing these signals into parts corresponding with certain locations inside said web-pages, with a second part (a portal's navigator) comprising a first part (a navigator's navlet), and possibly with a third part (a portal's window) for web browsing or activating a service selected via said navigator's navlet, a more dynamic network-unit offering many more possibilities has been created, due to the creation, inside said second part which does not originate from and is not controlled by a service provider, of said first part corresponding with a publishing space which originates from and is controlled by said service provider. A completely new concept for the Int(e)r(a)net is introduced, with an access provider supplying said second part and said service provider being coupled on-line with said access provider.

## Description

The invention relates to a network-unit for generating a signal to be displayed on a terminal.

Such a network-unit is generally known for example in the form of a switch, a router, a bridge, a gateway, a server etc., with said signal for example being a so-called markup language signal and/or a markup language based encoded signal displaying for example a web page like a portal. Such a markup language signal and/or a markup language based encoded signal corresponds for example with a Hyper Text Markup Language signal (HTML signal) or an Extended Markup Language signal (XML signal) or a Wireless Markup Language signal (WML signal) or a Handheld Device Markup Language signal (HDML signal).

The known network-unit is disadvantageous, inter alia, due to being static and offering a limited number of possibilities.

It is an object of the invention, inter alia, of providing a more dynamic network-unit offering more possibilities.

The network-unit according to the invention is characterised in that at least a first part of said signal originates from a service provider and is controlled by said service provider, with at least a second part of said signal not originating from said service provider, and with both parts being displayed on a display of said terminal.

By dividing said signal into parts for example corresponding with locations on said display (and/or inside said web page and then defined by location coordinates), with said second part for example corresponding with (and resulting in the displaying of) a portal's navigator for example comprising a navigator's navlet corresponding with (and being the displayed result of) said first part, and possibly with a third part for example corresponding with (and resulting in the displaying of) a portal's window for web browsing or activating a service which has been selected via said navigator's navlet, a dynamic network-unit offering many more possibilities has been created, due to the creation, in said second part (portal's navigator) which does not originate from said service provider and which is not controlled by said service provider, of said first part (a publishing space or navigator's navlet) which originates from said service provider and which is controlled by said service provider.

The invention is based on the insight, inter alia, that third party information need to be provided by said third party as flexible as possible.

The invention solves the problem, inter alia, of providing a more dynamic network-unit offering more possibilities, by introducing a completely new concept for the Int(e)r(a)net, according to which a portal is divided into a main window (the portal's window corresponding with said third part) and into a portal's navigator (corresponding with said second part) comprising one or more smaller windows (said publishing space being the navigator's navlet corresponding with said first part).

It should be noted that it's known, via so-calles iFrames in HTML signals, to introduce smaller windows into a larger window. But it is not yet known, however, to retrieve the information for these smaller windows (first parts) from one or more other parties than the one creating and supplying the larger window (second part).

A first embodiment of the network-unit according to the invention is characterised in that said first part originates on-line from said service provider.

By retrieving said first part on-line from said service provider, the information for this first part (navigator's navlet) is most up-to-date, thereby creating a more dynamic network-unit offering more possibilities.

A second embodiment of the network-unit according to the invention is characterised in that said second part originates from an access provider, with said first part originating from said service provider via said access provider.

By letting the access provider create said second part (portal's navigator), with said service provider creating said first part (navigator's navlet situated as a publishing space inside said portal's navigator), the cooperation between both providers is most efficient.

It should be noted that said network-unit belongs either to said access provider or to a network-provider offering its network to said access provider, and that, although said service provider creates and controlls said first part (navigator's navlet), said access provider generally will have some final control, like blocking this first part or not.

A third embodiment of the network-unit according to the invention is characterised in that said network-unit comprises a processor system with at least a first input coupled to said service provider for receiving at least said first part and a second input coupled to a memory for receiving at least said second part and an output for generating at least said signal.

By providing said network-unit with said processor system, via said first input said first part (navigator's navlet) is received, via said second input said second part (portal's navigator) is received, and via said output said signal is generated.

A fourth embodiment of the network-unit according to the invention is characterised in that said processor system comprises a third input for receiving a code for adjusting said generating.

Via said third input said generating (of said signal) can be adjusted, like for example sizes, colors, locations, services etc.

A fifth embodiment of the network-unit according to the invention is characterised in that said code originates from said terminal.

In this case said code may correspond with a user identification, a user email address, a user telephone number etc., to allow users to get their individual portal.

A sixth embodiment of the network-unit according to the invention is characterised in that said code originates from said access provider.

In this case said code may correspond with an access provider identification, an access email address, an access telephone number etc., and/or with a service provider identification, a service email address, a service telephone number etc. (in case said code originates from said service provider and arrives via said access provider) to allow the access provider or service provider to individualise portals, like the size, number, color, location etc. of the portal's navigator and the navigator's navlets.

The invention further relates to a processor system for use in a network-unit for generating a signal to be displayed on a terminal.

The processor system according to the invention is characterised in that at least a first part of said signal originates from a service provider and is controlled by said service provider, with at least a second part of said signal not originating from said service provider, and with both parts being displayed on a display of said terminal, which processor system comprises at least a first input coupled to said service provider for receiving at least said first part and a second input coupled to a memory for receiving at least said second part and an output for generating at least said signal.

Embodiments of the processor system according to the invention are in accordance with the embodiments of the network-unit according to the invention.

The invention also relates to a method for use in a network-unit for generating a signal to be displayed on a terminal.

The method according to the invention is characterised in that said method comprises the steps of receiving at least a first part of said signal from a service provider, which first part is controlled by said service provider, and of receiving at least a second part of said signal not from said service provider, with both parts being displayed on a display of said terminal.

Embodiments of the method according to the invention are in accordance with the embodiments of the network-unit according to the invention.

The invention yet further relates to a signal to be generated by a network-unit and to be displayed on a terminal.

The signal according to the invention is characterised in that at least a first part of said signal originates from a service provider and is controlled by said service provider, with at least a second part of said signal not originating from said service provider, and with both parts being displayed on a display of said terminal.

Embodiments of the signal according to the invention are in accordance with the embodiments of the network-unit according to the invention.

The invention will be further explained more detailledly at the hand of drawings, whereby
figure 1 discloses an example of a web page resulting from an example of a signal according to the invention generated in accordance with an example of a method according to the invention, and
figure 2 discloses an example of a network-unit according to the invention comprising an example of a processor system according to the invention.

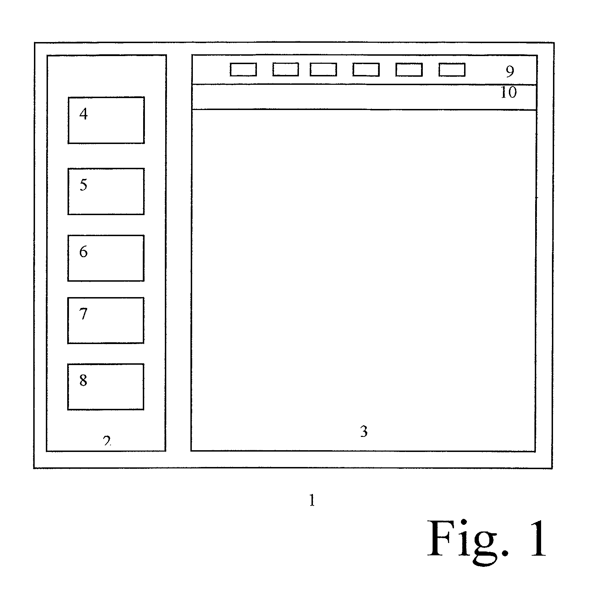

Figure 1 discloses a web page 1 like for example a portal and comprising five navigator's navlets 4-8 and a portal's navigator 2 and a main window 3 comprising an upper bar 9 and a lower bar 10. Said five navigator's navlets 4-8 correspond for example with five first parts of a markup language signal and/or a markup language based encoded signal, said portal's navigator 2 correspond for example with a second part of said markup language (based encoded) signal, and said main window 3 corresponds for example with a third part of said markup language (based encoded) signal, with an upper subpart (upper bar 9) for activating favorites, a start page, etc., and with a lower subpart (lower bar 10) disclosing a selected web page address. Alternatively, upper bar 9 and/or lower bar 10 may be on top of the portal's navigator 2 and/or on top of the combination of portal's navigator 2 and main window part 3. The web page displayed for example corresponds with a portal. The markup language (based encoded) signal corresponds for example with a Hyper Text Markup Language signal (HTML signal) or an Extended Markup Language signal (XML signal) or a Wireless Markup Language signal (WML signal) or a Handheld Device Markup Language signal (HDML signal).

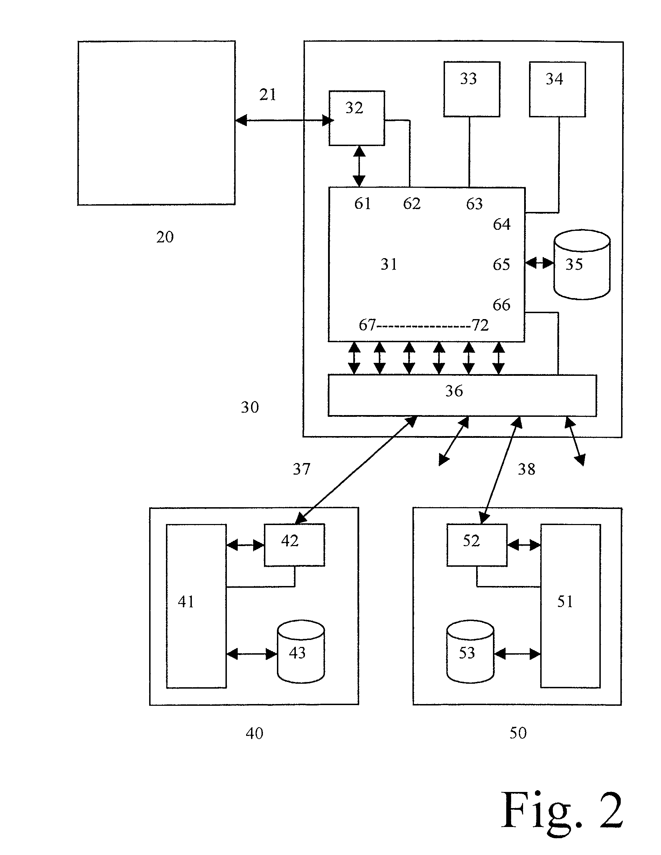

Figure 2 discloses a terminal 20 for displaying said web page or portal, and is coupled via a (wired or wireless) connection 21 to network-unit 30 comprising a processor system 31, a buffer/interface 32, a block 33, a block 34, a memory 35 and a coupler 36 which is coupled via a (wired or wireless) connection 37 to a first service provider 40 and via a (wired or wireless) connection 38 to a second service provider 50. Terminal 20 for example corresponds with a personal computer or a residential gateway having a display, and network-unit 30 for example corresponds with a switch, a router, a bridge, a gateway, a server etc.

In network-unit 30, which for example corresponds with a switch, a router, a bridge, a gateway, a server etc., buffer/interface 32 is coupled to connection 21 and via a connection to an in/output 61 of processor system 31 and via a control connection to an in/output 62 of processor system 31. Block 33 is coupled via a control connection to an in/output 63 of processor system 31, and block 34 is coupled via a control connection to an in/output 64 of processor system 31. Memory 35 like for example a server is coupled via a connection to an in/output 65 of processor system 31. Coupler 36 is coupled via a control connection to an in/output 66 of processor system 31 and is coupled via connections to in/outputs 67-72 of processor system 31, and is further coupled to connections 37 and 38.

In service provider 40, connection 37 is coupled to buffer/interface 42, which is further coupled via a connection and via a control connection to a processor system 41, which is further coupled via connection to a memory 43, like for example a server.

In service provider 50, connection 38 is coupled to buffer/interface 52, which is further coupled via a connection and via a control connection to a processor system 51, which is further coupled via connection to a memory 53, like for example a server.

Although (wired or wireless) connections 21, 37 and 38 seem to make direct couplings, in practice many further network-units not shown and of all possible different categories (like Domain Name Servers or DNSs) may be present in between.

The network-unit 30 according to the invention comprising the processor system 31 according to the invention functions as follows.

A user sitting behind terminal 20 is looking at web page 1 displayed on a display not shown of said terminal 20. This web page 1 is for example the result of an HTML signal sent from network-unit 30 to terminal 20 via connection 21. Said HTML signal comprises five first parts corresponding with said five navigator's navlets 4-8 and comprises a second part corresponding with the portal's navigator 2 and comprises a third part corresponding with the main window 3. By typing a web address via a keyboard not shown of said terminal 20, said user can surf the web, thereby using main window 3. By clicking on navigator's navlet 4,5 with his mouse not shown of terminal 20 (which navigator's navlets generally comprise - links to - URLs defining service providers 40,50), said user may retrieve services offered by service providers 40,50, thereby using main window 3.

According to prior art, all of said parts were stored in memory 35 of network-unit 30, which resulted in a static network-unit offering a small number of possibilities.

According to the invention, said second part is stored in memory 35, but said (five) first parts are not (apart from a possible buffering for bridging time-intervals), but originate from service providers, like the first part corresponding with navigator's navlet 4 originating via connection 37 from service provider 40 and like the first part corresponding with navigator's navlet 5 originating via connection 38 from service provider 50 (said third part thereby either originates from memory 35 or from one of said service providers or from a further source not shown). Thereto, in memory 43, the first part corresponding with navigator's navlet 4 is stored, which first part, together with a service identification code defining said first service provider, is supplied at regular time-intervals or on-line via processor system 41 and buffer/interface 42 and connection 37 to network-unit 30. In memory 53, the first part corresponding with navigator's navlet 5 is stored, which first part, together with a service identification code defining said second service provider, is supplied at regular time-intervals or on-line via processor system 51 and buffer/interface 52 and connection 38 to network-unit 30. Coupler 36 informs processor system 31 via in/output 66 of these receivals, after which, in dependence of said service identification codes, both parts are supplied to in/outputs 67,68 of processor system 31, which for example consults block 33 via in/output 63. Block 33 is for example a table memory defining which parts need to be combined for said user at terminal 20. Thereto, block 33 for example uses a user identification, and/or a user email address, and/or a user telephone number etc., together with for example said service identification codes and with for example access identification codes defining said second part (and possibly said third part). In response to this, processor system 31 retrieves said second part from memory 35 via in/output 65, and retrieves said third part from either memory 35 or from one of said service providers or from a further source not shown, and combines said first, second and third parts into said HTML signal, and sends it via in/output 61 and buffer/interface 32 and connection 21 to terminal 20.

As a result, a more dynamic network-unit offering more possibilities has been created, by introducing a completely new concept for the Int(e)r(a)net, according to which a portal is divided into a main window (the portal's window corresponding with said third part) and into a portal's navigator (corresponding with said second part) comprising one or more smaller windows (publishing space(s) being the navigator's navlet(s) corresponding with said first part(s)).

Additionally, block 34 for example comprises an adjustor for in response to a code adjusting the generating of said HTML signal (like for example sizes, colors, locations, services etc.) by adjusting one or more of said first, second and/or third parts and/or of the combining of these parts. Said code may originate from said terminal, in which case said code may correspond with a user identification, a user email address, a user telephone number etc., to allow users to get their individual portal. Thereby they either can adjust themselves by programming on-line (which generally will require a pincode, password, voice recognition etc.) or can inform the access provider via telephone, fax, email, letter etc. Said code may also originate from said access provider, in which case said code may correspond with an access provider identification, an access email address, an access telephone number etc., and/or with a service provider identification, a service email address, a service telephone number etc. (in case said code originates from said service provider and arrives via said access provider) to allow the access provider or service provider to individualise portals, like the size, number, color, location etc. of the portal's navigator and the navigator's navlets. Of course, a maximum number of possibilities is got in case of said adjustor receiving a code from said terminal as well as a code from said access provider as well as codes from each service provider.

So, network-unit 30 comprises processor system 31 with first inputs (in/outputs 67,68) coupled to service providers 40,50 for receiving said first parts and a second input (in/output 65) coupled to memory 35 for receiving said second and third part and an output (in/output 61) for generating at least said signal. Possibly, said processor system 31 comprises a third input (in/output 61 and/or 65 and/or 67,68) for receiving a code for adjusting said generating.

Said network-unit 30 belongs either to said access provider or to a network-provider offering its network to said access provider, in which case said access provider may correspond with (a part of) said processor system 31 and/or (a part of) said memory 35. Although said service provider creates and controlls said first part (navigator's navlet), said access provider generally will have some final control, like blocking this first part or not.

Each part of network-unit 30 and of service provider 40,50 shown in the form of a block or not shown, can be 100% hardware, 100% software or a mixture of both. Therefore, block 33 also comprises a memory function, block 34 also comprises an adjusting function, and coupler 36 also comprises a coupling function. Each block shown or not shown can be integrated with each other block shown and/or not shown per network-unit 30, service provider 40,50, but also per combinations of at least two of them. In addition to the memories shown, each block can have a further memory not shown for efficiency purposes. Processor system 31 may comprise a bus system coupled to all in/outputs and/or may comprise multiplexers and demultiplexers. Each in/output corresponds with an input, an output and/or an input + output. Connection 21 can be circuit-switched, packet-switched or always-on. Processor system 31 comprises a combining function (also known as a composing function) for combining (composing) said parts, and said access provider may be further coupled to and/or comprise at least a part of a publisher (publishing function) and/or a portal owner (portal function).

## Claims

1. Network-unit (30) for generating a signal to be displayed on a terminal (20), **characterised in that** at least a first part (4-8) of said signal originates from a service provider (40,50) and is controlled by said service provider (40,50), with at least a second part (2) of said signal not originating from said service provider (40,50), and with both parts being displayed on a display of said terminal (20).

2. Network-unit (30) according to claim 1, **characterised in that** said first part (4-8) originates on-line from said service provider (40,50).

3. Network-unit (30) according to claim 1 or 2, **characterised in that** said second part (2) originates from an access provider, with said first part (4-8) originating from said service provider (40,50) via said access provider.

4. Network-unit according (30) to claim 1, 2 or 3, **characterised in that** said network-unit (30) comprises a processor system (31) with at least a first input (67,68) coupled to said service provider (40,50) for receiving at least said first part (4-8) and a second input (65) coupled to a memory (35) for receiving at least said second part (2) and an output (61) for generating at least said signal.

5. Network-unit (30) according to claim 4, **characterised in that** said processor system comprises a third input (61,65,67,68) for receiving a code for adjusting said generating.

6. Network-unit (30) according to claim 5, **characterised in that** said code originates from said terminal (20).

7. Network-unit (30) according to claim 5, **characterised in that** said code originates from said access provider.

8. Processor system (31) for use in a network-unit (30) for generating a signal to be displayed on a terminal (20), **characterised in that** at least a first part (4-8) of said signal originates from a service provider (40,50) and is controlled by said service provider (40,50), with at least a second part (2) of said signal not originating from said service provider (40,50), and with both parts being displayed on a display of said terminal (20), which processor system (31) comprises at least a first input (67,68) coupled to said service provider (40,50) for receiving at least said first part (4-8) and a second input (65) coupled to a memory (35) for receiving at least said second part (2) and an output (61) for generating at least said signal.

9. Method for use in a network-unit for generating a signal to be displayed on a terminal, **characterised in that** said method comprises the steps of receiving at least a first part of said signal from a service provider, which first part is controlled by said service provider, and of receiving at least a second part of said signal not from said service provider, with both parts being displayed on a display of said terminal.

10. Signal to be generated by a network-unit and to be displayed on a terminal, **characterised in that** at least a first part of said signal originates from a service provider and is controlled by said service provider, with at least a second part of said signal not originating from said service provider, and with both parts being displayed on a display of said terminal.
